# EUROPÄISCHE PATENTSCHRIFT

(11) **EP 3 434 962 B1**
(45) Veröffentlichungstag und Bekanntmachung des Hinweises auf die Patenterteilung: **23.02.2022**
(21) Anmeldenummer: 17183176.1
(22) Anmeldetag: 26.07.2017
(51) Int. Cl.: F17C 13/00

(54) **FASERVERSTÄRKTER DRUCKBEHÄLTER**
FIBRE-REINFORCED PRESSURE VESSEL
RÉCIPIENT SOUS PRESSION RENFORCÉ DE FIBRES

(43) Veröffentlichungstag der Anmeldung: 30.01.2019
(73) Patentinhaber: NPROXX B.V., 6422 RK Heerlen (NL)
(72) Erfinder: Middendorf, Christian, 52072 Aachen (DE)
(74) Vertreter: FARAGO Patentanwälte

(56) Entgegenhaltungen:
- US-A- 3 047 191

## Beschreibung

### Technisches Gebiet der Erfindung

Die Erfindung bezieht sich auf einen mittels Faserbändern gefertigten faserverstärkten Druckbehälter und auf ein Verfahren zur Herstellung des faserverstärkten Druckbehälters.

### Stand der Technik

Der Markt für Druckbehälter, die mit Faserverbundmaterial verstärkt werden, wächst kontinuierlich. Faserverstärkte Druckbehälter vereinen ein leichtes Gewicht mit einer großen mechanischen Festigkeit. Die zunehmende Förderung von Erdgas und Fracking-Gas speziell in Ländern ohne entsprechendes Pipelinenetz schafft beispielsweise einen Bedarf an solchen Druckbehältern, hier in Form von Druckbehältern zur Gasspeicherung. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Für den Transport der Druckbehälter sind leichte Druckbehälter gewünscht, weil ein Transport von Druckbehältern mit hohen Behältergewichten unnötig viel Energie verbraucht und daher zu hohe Transportkosten verursacht.

Gegenwärtig benutzte Druckbehälter zur Speicherung von Gas besitzen einen zylindrischen Mittelteil, auf dem sich beidseitig Polkappen zum Verschluss des Mittelteils befinden. Die Verstärkungsschicht aus Faserverbundmaterial wird als Außenschicht des Druckbehälters beispielweise mittels eines Wickelverfahrens auf einen Innenbehälter (bei Druckbehältern der sogenannte Liner), der als Wickelkern fungiert, aufgewickelt. Ein Wickelverfahren ist für die zeit- und kostengünstige Herstellung von Faserverbundschichten der bevorzugte Prozess. Während der Innenbehälter beispielsweise die Dichtigkeit des Druckbehälters garantiert, verleiht die Verstärkungsschicht aus Faserverbundmaterial dem Druckbehälter die notwendige mechanische Stabilität. Beispielsweise wird bei Druckbehältern des Typs 3 ein metallischer Innenbehälter (metallischer Liner) beispielsweise aus Aluminium oder Stahl eingesetzt, bei Druckbehältern des Typs 4 ist der Innenbehälter (Liner) aus einem Kunststoffmaterial hergestellt. Bei Druckbehältern des Typs 3 trägt dabei der Liner mechanische Lasten in nennenswertem Umfang mit, während bei Druckbehältern vom Typ 4 der Liner keinen Beitrag zur Lasttragung liefert. Typ 4-Druckbehälter weisen in der Regel beidseitig sogenannte metallische Bossteile, beispielsweise aus Aluminium oder Stahl zur Aufnahme von z.B. Ventilen oder anderen Anschlussteilen auf, die zentrisch zur Längsachse des Behälters angebracht sind und einen Teil des Polkappenbereiches umfassen.

Ein faserverstärkter Druckbehälter mit einem Innenbehälter mit einem drehsymmetrischen Mittelteil ist aus der US 3 047 191 A bekannt.

Die Verstärkungsschicht eines Druckbehälters muss axiale und radiale Spannungen aufnehmen können; dies geschieht durch das Ablegen von Endlosfasern (in Form sogenannter Rovingbänder) in Schichten, deren Orientierung und Wandstärke dem jeweiligen Spannungsverläufen entspricht; im zylindrischen Bereich können die radialen Spannungen im Wesentlichen zum Beispiel durch das Wickeln in Umfangsrichtung, d.h. eine Endlosfaser (ein sogenanntes Rovingband) mit einem Winkel von ca. 80° bis 90° zur Zylinderachse auf dem Liner abgelegt, aufgenommen werden; wohingegen die axialen Spannungen im Wesentlichen durch Helixwicklungen aufgenommen werden, d.h. Wicklungen, die über die gesamte Behälterlänge verlaufen und Winkel zwischen 10° und 80° zur Behälterachse aufweisen. Dabei lassen sich sogenannte flache Helixlagen mit einem Winkel zwischen etwa 10° und etwa 25° zur Längsachse des Behälters von sogenannten steilen Helixlagen mit Wickelwinkeln von etwa 25° bis etwa 80°, bevorzugt von etwa 40° bis etwa 75° zur Längsachse des Behälters, unterscheiden. Die flachen Helixlagen umschließen dabei vollständig die Bossteile, wohingegen die steilen Helixlagen in erster Linie den Polkappenbereich zwischen Bossteil und zylindrischem Behältermittelstück abdecken.

Fasern auf der gekrümmten Oberfläche der Polkappen sind nur dann ortsfest, wenn sie entlang eines geodätischen Pfads laufen. Der geodätische Pfad bezeichnet dabei einen Verlauf zwischen zwei Punkten, der eine minimale

Entfernung darstellt. Eine Faser, die auf einem geodätischen Pfad verlegt ist, müsste sich dehnen, um aus ihrer Lange verrutschen zu können. Daher sind geodätisch gewickelte Fasern rutschsicher verlegt. Um den Wickelprozess zu beschleunigen, werden Faserbänder aus mehreren Fasern verwendet. Diese Bänder weisen daher eine Breite auf, die beispielsweise zwischen 5% und 15%, vorzugsweise 9% bis 11%, des Durchmessers des zylindrischen Mittelteils besitzt. Bei der Wicklung von Polkappen mit Faserbändern weichen allerdings die meisten Fasern, beispielsweise alle Fasern außer der mittleren, durch die Umlenkung, die das Faserband an den Polkappen erfährt, von dem geodätischen Pfad ab, so dass die meisten Fasern der Faserbänder verrutschen können. Darüber hinaus wird das Faserband bei den üblichen Wickelverfahren unter einer bestimmten Zugkraft auf den Liner gewickelt. Durch die Abweichung eines Teils der Fasern vom geodätischen Pfad in den Umlenkungen an den Polkappen wird die Faserspannung so beeinflusst, dass sich die Spannung der kurveninneren Fasern erniedrigt. Je nach Geometrie der Polkappe und gewählter Faserspannung kann die Faserspannung der kurveninneren Fasern dabei komplett verlorengehen. Diese negativen Effekte sind insbesondere bei steilen Helixlagen, also an dem Übergangsbereich von Polkappe zu dem zylindrischen Mittelteil des Druckbehälters, zu beobachten.

Es wäre daher wünschenswert, einen Druckbehälter zur Verfügung zu haben, bei dem die Polkappen effektiv mit Faserverbundmaterial verstärkt werden können, wobei die Fasern über der Polkappe dennoch zuverlässig in ihrer gewickelten Position verbleiben sowie eine möglichst gleichmäßige Faserspannung über den gesamten Querschnitt des Faserbandes aufrechterhalten bleibt.

### Zusammenfassung der Erfindung

Es ist eine Aufgabe der vorliegenden Erfindung, einen Druckbehälter zur Verfügung zu stellen, bei dem die Polkappen effektiv mit Faserverbundmaterial verstärkt sind und die Fasern über der Polkappe, insbesondere auch an dem Übergangsbereich von Polkappe zu dem zylindrischen Mittelteil des Druckbehälters, dennoch zuverlässig in ihrer gewickelten Position verbleiben sowie eine möglichst gleichmäßige Faserspannung über den gesamten Querschnitt des Faserbandes aufrechterhalten bleibt.

Diese Aufgabe wird gelöst durch einen faserverstärkten Druckbehälter umfassend einem Innenbehälter mit einem drehsymmetrischen Mittelteil, vorzugsweise ein zylindrisches Mittelteil, mit einer Symmetrieachse, vorzugsweise eine Zylinderachse, entlang des Mittelteils und zwei das Mittelteil abschließende kuppelförmige Polkappen, und eine auf den Innenbehälter zu dessen Verstärkung gewickelte Außenschicht aus Faserverbundmaterial aus mehreren übereinander angeordneten Lagen an Fasern eingebettet in einem Matrixmaterial, die als Faserband aus einer Anzahl an Fasern mit einem orts- und lagenabhängigen Faserverlauf über den Innenbehälter verlaufen, wobei das Faserband zumindest in einigen der Lagen aus dem Mittelteil mit einem jeweiligen Eintrittsfaserwinkel relativ zu der Symmetrieachse in den Bereich der kuppelförmigen Polkappen eintritt und dort in einem jeweiligen Umkehrpunkt in seiner Wickelrichtung zurück in Richtung des Mittelteils geführt wird, und im Bereich der Polkappen mindestens eine Verdrillung aufweist.

Das drehsymmetrische Mittelteil bezeichnet dabei ein Mittelteil, das sich bei Drehung um seine Symmetrieachse um bestimmte Winkel auf sich selbst abgebildet. Das drehsymmetrische Mittelteil hat beispielsweise eine kreisrunde, elliptische oder andersartig regelmäßig geformte Querschnittsform senkrecht zur Symmetrieachse. Bei zylindrischen Mittelteilen ist die Symmetrieachse die Zylinderachse des Mittelteils.

Der Begriff "kuppelförmig Polkappe" bezeichnet hierbei eine Polkappe mit dreidimensionaler Form mit einer höchsten Erhebung in der Mitte der kuppelförmigen Polkappe über einer durch den unteren Rand der Polkappen definierten Grundfläche, wobei die Grundfläche der Querschnittsfläche des Mittelteils senkrecht zur Symmetrieachse entspricht. Beispielsweise bei zylinderförmigen Mittelteilen ist die Grundfläche der Polkappe ein Kreis. Je nach Querschnittsfläche des Mittelteils können die dazugehörigen Polkappen unterschiedliche Grundflächen besitzen. Die kuppelartigen Polkappen können auch beispielsweise eine von einer Halbkugel abweichende Form besitzen, die im Deckel-Randbereich angrenzend an den Mittelteil des Innenbehälters eine stärkere Krümmung gegenüber einer Halbkugeloberfläche aufweist, während der Zentralbereich der Polkappe eine geringere Krümmung gegenüber einer Halbkugeloberfläche aufweist. Mit dieser kuppelartigen Polkappe kann der Steifigkeits- und Lastsprung und das dadurch verursachte Spannungsverhältnis zwischen einer Umfangsrichtung des Mittelteils und einer axialen Richtung in Richtung der Polkappen durch axial auf der Polkappe im Zentralbereich angeordnete erste Fasern besonders gut aufgenommen werden. Eine solche besonders geeignete kuppelförmige Deckelfläche wird auch als Isotensoid bezeichnet. Ein Isotensoid bezeichnet dabei eine Form, die in einer darauf gewickelten Außenschicht aus einem Faserverbundmaterial eine konstante Spannung in den Fasern in allen Punkten des Faserverlaufs bewirkt. Eine axial ausgerichtete Faser bezeichnet dabei Fasern mit einem Faserverlauf mit einem kleinen Faserwinkel beispielsweise kleiner 60°, bevorzugt kleiner 20° zur Symmetrieachse des Mittelteils. Entsprechende Lagen an Faserverbundmaterial werden als axiale Lagen beziehungsweise Helixlagen bezeichnet. Im Gegensatz dazu besitzen Fasern in sogenannte radialen Lagen oder Umfangslagen eine Faserrichtung mit einem Faserwinkel zwischen etwa 85° und etwa 90° zur Symmetrieachse des Mittelteils. Um eine gewünschte Gesamtstabilität der Außenschicht sowohl im Mittelteil als auch an den Polkappen sowohl gegen radiale als auch gegen axial wirkende Kräfte zu erhalten, kann die Außenschicht dabei eine oder mehrere Helixlagen und eine oder mehrere Umfangslagen mit gleichen oder unterschiedlichen Dicken umfassen. Hierbei werden die Umfangslagen im Wesentlichen im Mittelteil und gegebenenfalls je nach Ausführung der Polkappen im Randbereich der Polkappen gewickelt, während die Helixlagen den gesamten Druckbehälter inklusive der Polkappen und des Mittelteils überdecken.

Das Faserverbundmaterial besteht im Allgemeinen aus zwei Hauptkomponenten, hier aus Fasern, eingebettet in einem Matrixmaterial, das den festen Verbund zwischen den Fasern herstellt. Das Faserverbundmaterial wird hierbei nicht als einzelne Faser, sondern als Faserband mit mehreren Fasern nebeneinander gewickelt, wobei die Fasern in Kontakt zueinander eng nebeneinander liegen. Dadurch entsteht eine Faserschicht, auf die die Fasern in weiteren Faserlagen gewickelt werden, bis das Faserverbundmaterial die gewünschte Dicke besitzt und eine entsprechende Außenschicht mit dieser Dicke entstanden ist. In einer Ausführungsform umfasst die Außenschicht erste und weitere Fasern, beispielsweise zweite Fasern, in mehrere Faserschichten. Durch den Verbund erhält das Faserverbundmaterial höherwertige Eigenschaften, wie beispielsweise eine höhere Festigkeit als jede der beiden einzelnen beteiligten Komponenten liefern könnte. Die Verstärkungswirkung der Fasern in Faserrichtung tritt ein, wenn das Elastizitätsmodul der Fasern in Längsrichtung größer ist als das Elastizitätsmodul des Matrixmaterials, wenn die Bruchdehnung des Matrixmaterials größer ist als die Bruchdehnung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern, verwendet werden. Als Matrixmaterialien können beispielsweise Duromere, Elastomere oder Thermoplaste verwendet werden. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können einzelne Faserlagen im Faserverbundbereich eine einzelne Faser oder mehrere gleiche oder unterschiedliche Fasern umfassen.

Der Begriff "Verdrillung" bezeichnet dabei das Gegeneinanderverwinden der Fasern eines Faserbands umeinander. Bei dem verdrillten Faserband tauschen die einzelnen Fasern des Faserbands am Punkt der Verdrillung ihren Platz zueinander. Eine einzelne Verdrillung bezeichnet dabei die Drehung des Faserbands um 180 Grad. Beispielsweise wird eine Faser rechts außen im Faserband nach einer Verdrillung um 180 Grad zur Faser links außen im Faserband. Entsprechen wird die zweite Faser von Rechts nach der Verdrillung um 180 Grad zur zweiten Faser von Links und so weiter. Bei der vorliegenden Erfindung wird das Faserband (das sogenannte Rovingband) nicht, wie bisher bei faserverstärkten Druckbehältern üblich, glatt um die kuppelförmige Polkappe gelegt, sondern gemäß der Erfindung im Faserverlauf über die Polkappe in sich verdrillt abgelegt. Dadurch wird zum einen verhindert, dass das Faserband auf Grund der Polkappenkrümmung und der für die meisten Fasern im Faserband dort vorliegenden Abweichung vom geodätischen Wickelpfad (insbesondere für die äußeren Fasern im Faserband) auseinander läuft und abrutschen kann und somit die Fadenspannung teilweise oder ganz verloren geht. Zum anderen besteht so die Möglichkeit der gezielten und örtlich begrenzten Einbringung einer Materialanhäufung in besonders belasteten Bereichen der Polkappen.

Die vorliegende Erfindung stellt somit einen Druckbehälter zur Verfügung, bei dem die Polkappen effektiv mit Faserverbundmaterial verstärkt sind und zumindest die Fasern der verdrillten Faserbänder über der Polkappe dennoch zuverlässig in ihrer gewickelten Position verbleiben, wobei eine möglichst gleichmäßige Faserspannung über den gesamten Querschnitt des Faserbandes aufrechterhalten bleibt. Insbesondere ist der Vorteil bei steilen Helixlagen zu beobachten.

In einer vorteilhaften Ausführungsform ist die Außenschicht mit steilen und flachen Helixlagen gewickelt. Die Kombination von flachen und steilen Helixlagen vereint die Vorteile der jeweiligen Wickelwinkel miteinander. Wobei zumindest eine, mehrere oder alle Helixlagen mit Verdrillung gewickelt sind.

In einer Ausführungsform ist die Verdrillung eine Verdrillung um genau 180 Grad. Diese Verdrillung führt dazu, dass die Fasern des Faserbandes ihre Position tauschen, sodass die auf der gekrümmten Oberfläche der Polkappen verlaufenden Fasern von einer Außenposition relativ zum Mittelpunkt der Polkappe zu einer Innenposition wechseln und umgekehrt, sodass die Strecke des Faserverlaufs aller Faser in etwa gleich ist. Dieses wäre ohne Verdrillung nicht der Fall, da dann die äußere Faser eine andere Weglänge um die Polkappe herum bestreiten würde als die innere Faser des jeweiligen Faserbands.

In einer weiteren Ausführungsform ist die Verdrillung in dem Umkehrpunkt des jeweiligen Faserbands angeordnet. Bei dieser Position der Verdrillung ist die Strecke des Faserverlaufs aller Fasern beispielsweise bei einer Verdrillung um 180 Grad exakt gleich, sodass alle Fasern des Faserbands die gleiche Spannung aufweisen und somit besonders zuverlässig in ihrer gewickelten Position im Bereich der Polkappen verbleiben.

In einer weiteren Ausführungsform sind die Verdrillungen der Faserbänder einer Lage mit gleichem Eintrittsfaserwinkel auf einem Kreis um einen geometrischen Mittelpunkt der Polkappe herum angeordnet, wobei ein Durchmesser des Kreises unter anderem vom jeweiligen Eintrittsfaserwinkel abhängt. Der Durchmesser dieses Kreises ergibt sich im Wesentlichen aus dem Sinus des Eintrittsfaserwinkels und dem Zylinderdurchmesser des Mittelteils.

In einer bevorzugten Ausführungsform sind die Verdrillungen aller verdrillten Faserbänder auf jeweiligen, den einzelnen Lagen zugeordneten, konzentrisch zueinander liegenden Kreisen um den Mittelpunkt der Polkappen angeordnet. Dabei sind die Kreise mit den Verdrillungen vorzugsweise nicht direkt übereinander angeordnet. Dies verhindert zum einen, dass über die Verdrillung gewickelte Lagen an Fasermaterial auf Grund dann entstehender übermäßiger lokaler Aufdickung den direkten Kontakt zu den darunter befindlichen Faserlagen verlieren und somit auf diesen ohne dazwischen befindliche Hohlräume aufliegen. Zum anderen ermöglicht diese Anordnung der Verdrillungen einen über die kuppelartige Polkappe entstehenden konkaven Oberflächenverlauf gezielt aufzufüllen und dadurch eine für die folgenden Lagen günstige Polkappenkontur zu erzeugen.

In einer weiteren Ausführungsform weist die Außenschicht zumindest in einem zentralen Bereich der Polkappen durch eine, gegenüber der herkömmlichen Ablage ohne Verdrillung, örtlich begrenzte, ringförmige Materialanhäufung eine Schichtdicke auf, die größer, vorzugsweise mehr als 50% größer, als die einer Faserverbundschicht ohne verdrillte Faserbänder ist. Dadurch wird gerade im Bereich der höchsten Lasten auf die Polkappe eine ringförmige Umfangsverstärkung der Außenschicht erzeugt.

Die Erfindung betrifft des Weiteren ein Verfahren zur Herstellung eines erfindungsgemäßen faserverstärkten Druckbehälters umfassend die Schritte:
- Bereitstellen eines Innenbehälters mit einem drehsymmetrischen, vorzugsweise zylindrischen, Mittelteil mit einer Symmetrieachse, vorzugsweise einer Zylinderachse, und zwei das Mittelteil abschließende kuppelförmige Polkappen;
- Wickeln eines Faserbandes aus einer Anzahl an Fasern in mehreren Lagen mit einem orts- und lagenabhängigen Faserverlauf über das Mittelteil und die Polkappen des Innenbehälters umfassend:
   - Eintreten des Faserbands zumindest in einigen der Lagen aus dem Mittelteil mit einem jeweiligen Eintrittsfaserwinkel relativ zu der Zylinderachse in den Bereich der Polkappen;
   - Verdrillen aller Faserbänder einer Lage zumindest eines Teils der Lagen im Bereich der Polkappen zur Erzeugung einer Verdrillung;
   - Rückführen des Faserbands in einem jeweiligen Umkehrpunkt in umgekehrter Wickelrichtung zurück in Richtung des Mittelteils; und
   - Wiederholen der voranstehenden Wickelschritte bis zur Fertigstellung der Außenschicht des Druckbehälters aus Faserverbundmaterial aus mehreren übereinander angeordneten Lagen an Fasern eingebettet in einem Matrixmaterial.

Die vorliegende Erfindung stellt somit ein Verfahren zur Herstellung des erfindungsgemäßen Druckbehälters zur Verfügung, bei dem die Polkappen effektiv mit Faserverbundmaterial verstärkt sind und zumindest die Fasern der verdrillten Faserbänder über der Polkappe dennoch zuverlässig in ihrer gewickelten Position verbleiben.

In einer Ausführungsform wird dabei der Schritt des Verdrillens für jedes der Faserbänder einer zu verdrillenden Lage im Bereich der Polkappen um genau 180 Grad durchgeführt.

In einer weiteren Ausführungsform erfolgt dabei der Schritt des Verdrillens im Umkehrpunkt.

In einer weiteren Ausführungsform wird dabei der Schritt des Verdrillens so durchgeführt, dass vorzugsweise die Verdrillungen der zu verdrillenden Lagen nicht direkt übereinander angeordnet sind.

In einer weiteren Ausführungsform wird dabei der Schritt des Verdrillens so durchgeführt, dass die Verdrillungen der Faserbänder mit gleichem Eintrittsfaserwinkel auf einem Kreis um einen geometrischen Mittelpunkt der Polkappe herum angeordnet sind, wobei ein Durchmesser des Kreises vom jeweiligen Eintrittsfaserwinkel abhängt. In einer bevorzugten Ausführungsform sind die Verdrillungen aller verdrillter Faserbänder der zu verdrillenden Lagen auf jeweiligen konzentrisch zueinander liegenden Kreisen um den Mittelpunkt der Polkappen angeordnet. In einer Ausführungsform ist dabei das Mittelteil ein zylindrisches Mitteilteil mit einer Zylinderachse als die Symmetrieachse.

### Kurze Beschreibung der Abbildungen

Diese und andere Aspekte der vorliegenden Erfindung sind im Detail in den Abbildungen wie folgt gezeigt.
- Fig.1:: eine Ausführungsform eines Faserbands mit mehreren Fasern.
- Fig.2:: schematische Darstellung eines einmal verdrillten Faserbands.
- Fig.3:: erfindungsgemäßer Druckbehälter in der Ausführungsform eines Druckbehälters im seitlichen Schnitt.
- Fig.4:: schematische Darstellung des Faserverlaufs im Bereich der Polkappe in Draufsicht auf die Polkappe.
- Fig.5:: eine Ausführungsform des erfindungsgemäßen Verfahrens.

### Detaillierte Beschreibung von Ausführungsbeispielen

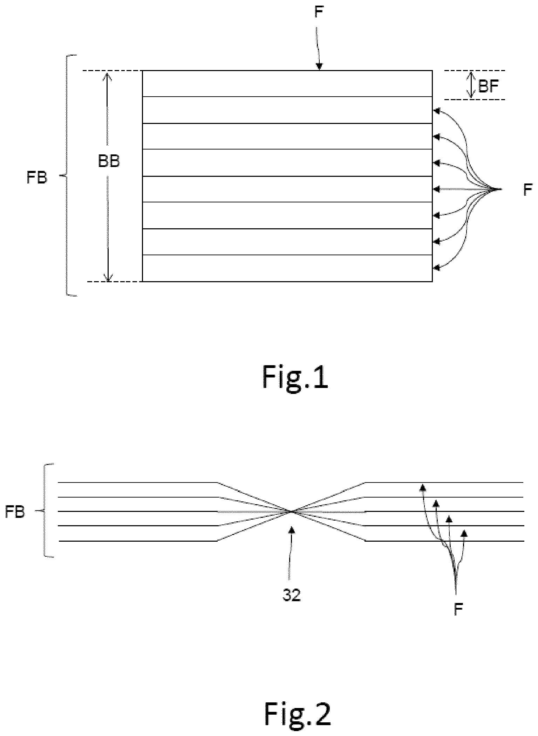

Fig. 1 zeigt eine Ausführungsform eines Faserbands FB mit mehreren Fasern F, hier beispielsweise mit acht nebeneinander ohne Lücken zueinander angeordnete Faser F, die jeweils die gleiche Breite BF besitzen. Solche Fasern sind beispielsweise Glasfasern, Kohlenstofffasern, Aramidfasern oder Basaltfasern. Das Faserband FB selbst hat eine gesamte Breite BB von 5% und 15%, vorzugsweise zwischen 9% und 11% des Durchmessers des Mittelteils.
Fig.2 zeigt eine schematische Darstellung eines einmal verdrillten Faserbands FB, wo zur besseren Übersicht die Fasern F als separate Linien dargestellt sind. Bei den tatsächlich verwendeten Faserbändern FB sollten zwischen den Fasern F keine Zwischenräume sein. Bei dem hier einmal um 180 Grad verdrillten Faserband FB tauschen die einzelnen Fasern F des Faserbands FB am Punkt der Verdrillung 32 ihren Platz zueinander. Eine einzelne Verdrillung 32 bezeichnet dabei die Drehung des Faserbands FB um 180 Grad, wie hier gezeigt. Beispielsweise wird eine Faser F oben außen im Faserband FB nach einer Verdrillung um 180 Grad zur Faser F unten außen im Faserband FB. Entsprechen wird die zweite Faser F von oben nach der Verdrillung um 180 Grad zur zweiten Faser F von unten und so weiter.

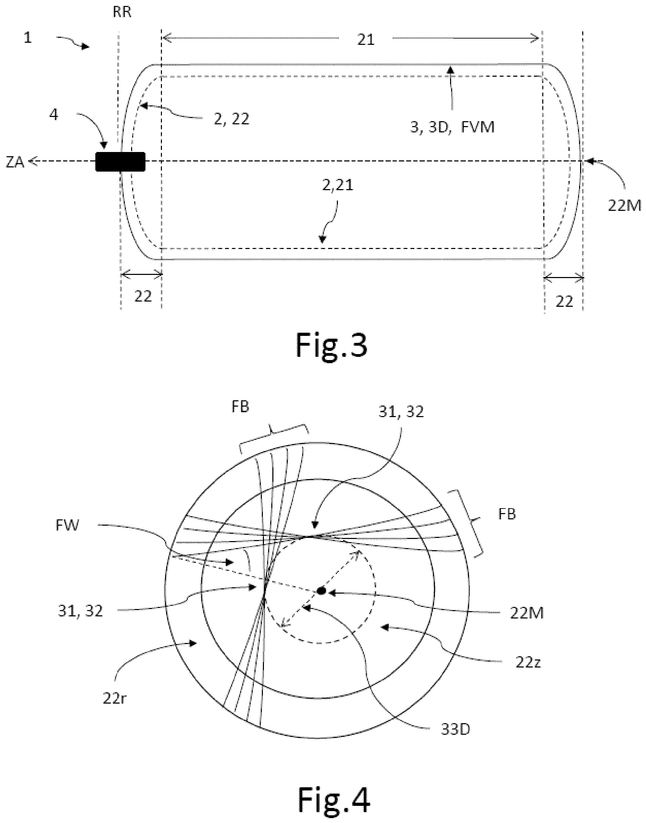

Fig.3 zeigt den erfindungsgemäßen Druckbehälter im seitlichen Schnitt umfassend einem Innenbehälter 2 mit einem zylinderförmigen Mittelteil 21 mit der Zylinderachse ZA als Symmetrieachse entlang des Mittelteils 21 und zwei das Mittelteil 21 an beiden Enden abschließende kuppelförmige Polkappen 22. Hierbei ist die eine Polkappe mit einem Ventil 4 zum Einlassen und Auslassen von Gas aus dem Druckbehälter 1 heraus ausgerüstet. Auf den Innenbehälter 2 ist zu dessen Verstärkung eine Außenschicht 3 aus Faserverbundmaterial FVM aus mehreren übereinander angeordneten Lagen an Fasern F eingebettet in einem Matrixmaterial gewickelt, die als Faserband FB (siehe Fig.1 und 2 ) aus einer Anzahl an Fasern F mit einem orts- und lagenabhängigen Faserverlauf über den Innenbehälter 2 verlaufen, wobei das Faserband FB zumindest in einigen der Lagen aus dem Mittelteil 21 mit einem jeweiligen Eintrittsfaserwinkel FW relativ zu der Zylinderachse ZA in den Bereich der kuppelförmigen Polkappen 22 eintritt und dort in einem jeweiligen Umkehrpunkt 31 in seiner Wickelrichtung WR zurück in Richtung des Mittelteils 22 geführt wird, wobei zumindest ein Teil der Faserbänder FB im Bereich Polkappen 22 mindestens eine Verdrillung 32 aufweist. Um eine gewünschte Gesamtstabilität der Außenschicht 3 sowohl im Mittelteil 21 als auch an den Polkappen 22 sowohl gegen radiale als auch gegen axial wirkende Kräfte zu erhalten, umfasst die Außenschicht 3 dabei sowohl mehrere Helixlagen, die den gesamten Druckbehälter 1 inklusive der Polkappen 22 und des Mittelteils 21 überdecken sowie mehrere Umfangslagen mit gleichen oder unterschiedlichen Dicken, wobei die Umfangslagen im Wesentlichen im Mittelteil 21 und gegebenenfalls je nach Ausführung der Polkappen 22 im Randbereich 22r der Polkappen 22 gewickelt sind. Die Helixlagen umfassen dabei axial ausgerichtete Fasern F mit einem Faserverlauf mit einem kleinen Faserwinkel FW beispielsweise kleiner 60 Grad, bevorzugt kleiner 20 Grad zur Zylinderachse ZA. Im Gegensatz dazu besitzen Fasern F in den Umfangslagen eine Faserrichtung mit einem Faserwinkel FW beispielsweise größer 80 Grad zur Zylinderachse.
Fig.4 zeigt eine schematische Darstellung des Faserverlaufs im Bereich einer kreisförmigen kuppelförmigen Polkappe 22 in Draufsicht auf die Polkappe 22. Das entsprechende zylindrische Mittelteil ist hier nicht gezeigt, siehe dazu Fig. 3 . In dieser Ausführungsform weisen alle Faserbänder FB im Bereich der Polkappen 22 eine Verdrillung 32 auf, was aus Übersichtsgründen durch zwei Faserbänder FB schematisch dargestellt ist. Die hier gezeigt Verdrillung 32 ist eine Verdrillung um genau 180 Grad, wobei die dargestellten Verdrillungen 32 im Umkehrpunkt 31 des jeweiligen Faserbands FB angeordnet sind. Zusätzlich sind Verdrillungen 32 der Faserbänder FB (hier besitzen die beiden Faserbänder FB den gleichen Eintrittsfaserwinkel FW beim Übergang vom Mittelteil 21 auf die Polkappe 22) auf einem Kreis 33 um einen geometrischen Mittelpunkt 22M der Polkappe 22 herum angeordnet, wobei ein Durchmesser 33D des Kreises 33 unter anderem vom jeweiligen Eintrittsfaserwinkel FW abhängt. In dieser Ausführungsform würden zusätzlich die Verdrillungen 32 der weiteren Faserbänder FB für andere Eintrittsfaserwinkel FB auf jeweiligen konzentrisch zueinander und zum dargestellten Kreis 33 um den Mittelpunkt 22M der Polkappen 22 liegen, was hier aus Übersichtsgründen nicht dargestellt ist. Durch die Verdrillungen 32 weist die Außenschicht 3 zumindest in einem zentralen Bereich 22z der Polkappen 22 durch eine Materialanhäufung eine Schichtdicke 3D auf, die größer, vorzugsweise mehr als 50% größer, als die einer Faserverbundschicht FVM ohne verdrillte Faserbänder FB ist.

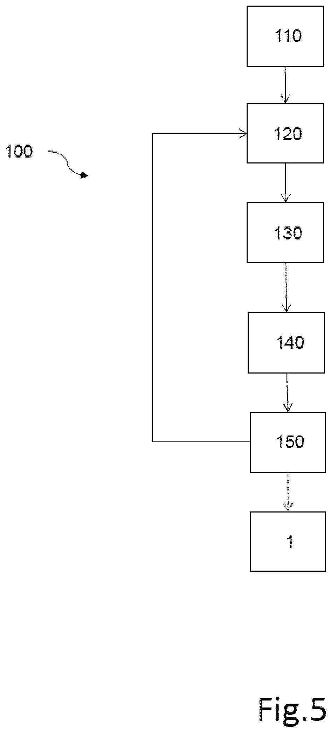

Fig.5 zeigt eine Ausführungsform des erfindungsgemäßen Verfahrens 100 zur Herstellung eines erfindungsgemäßen faserverstärkten Druckbehälters 1 umfassend die Schritte des Bereitstellens 110 eines Innenbehälters 2 mit einem drehsymmetrischen, vorzugsweise zylindrischen, Mittelteil 21 mit einer Symmetrieachse ZA, vorzugsweise einer Zylinderachse, und zwei das Mittelteil 21 abschließende kuppelförmige Polkappen 22; des Wickelns 120 eines Faserbandes FB aus einer Anzahl an Fasern F in mehreren Lagen mit einem orts- und lagenabhängigen Faserverlauf über das Mittelteil 21 und die Polkappen des Innenbehälters 2 umfassend die nachfolgenden einzelnen Schritte des Wickelprozesses des Eintretens 130 des Faserbands FB zumindest in einigen der Lagen aus dem Mittelteil 21 mit einem jeweiligen Eintrittsfaserwinkel FW relativ zu der Zylinderachse ZA in den Bereich der Polkappen 22; des Verdrillens 140 zumindest eines Teils der Faserbänder FB im Bereich Polkappen 22 zur Erzeugung einer Verdrillung 32; des Rückführens 150 des Faserbands in einem jeweiligen Umkehrpunkt 31 in umgekehrter Wickelrichtung WR zurück in Richtung des Mittelteils 22; und des Wiederholens der voranstehenden Wickelschritte 120, 130, 140, 150 bis zur Fertigstellung der Außenschicht 3 des Druckbehälters 1 aus Faserverbundmaterial FVM aus mehreren übereinander angeordneten Lagen an Fasern F eingebettet in einem Matrixmaterial. Hierbei kann der Schritt des Verdrillens 140 für jedes der Faserbänder FB im Bereich der Polkappe 22 um genau 180 Grad durchgeführt werden. Hierbei kann der Schritt des Verdrillens 140 im Umkehrpunkt 31 erfolgen. Der Schritt des Verdrillens 140 kann so durchgeführt werden, dass die Verdrillungen 32 der Faserbänder FB mit gleichem Eintrittsfaserwinkel FW auf einem Kreis 33 um einen geometrischen Mittelpunkt 22M der Polkappe 22 herum angeordnet sind, wobei ein Durchmesser 33D des Kreises 33 unter anderem vom jeweiligen Eintrittsfaserwinkel FW abhängt, vorzugsweise sind die Verdrillungen 32 aller verdrillter Faserbänder FB auf jeweiligen konzentrisch zueinander liegenden Kreisen 33 um den Mittelpunkt 22M der Polkappen 22 angeordnet. Hierbei liegen die Kreise mit den Verdrillungen vorzugsweise nicht übereinander. Dies verhindert zum einen, dass über die Verdrillung gewickelte Lagen an Fasermaterial auf Grund dann entstehender übermäßiger lokaler Aufdickung den direkten Kontakt zu den darunter befindlichen Faserlagen verlieren und somit auf diesen ohne dazwischen befindliche Hohlräume aufliegen. Zum anderen ermöglicht diese Anordnung der Verdrillungen einen über die kuppelartige Polkappe entstehenden konkaven Oberflächenverlauf gezielt aufzufüllen und dadurch eine für die folgenden Lagen günstige Polkappenkontur zu erzeugen.

Die hier gezeigten Ausführungsformen stellen nur Beispiele für die vorliegende Erfindung dar und dürfen daher nicht einschränkend verstanden werden.

### LISTE DER BEZUGSZEICHEN

- 1: erfindungsgemäßer Druckbehälter, beispielsweise ein Druckbehälter
- 2: Innenbehälter
- 21: drehsymmetrisches Mittelteil des Innenbehälters, beispielsweise ein zylindrisches Mittelteil
- 22: kuppelförmige Polkappen auf dem Mittelteil
- 22M: geometrischer Mittelpunkt der kuppelförmigen Polkappe
- 22z: zentraler Bereich der kuppelförmigen Polkappe
- 22r: Radbereich der kuppelförmigen Polkappe
- 3: Außenschicht aus Faserverbundmaterial
- 3D: Schichtdicke der Außenschicht
- 31: Umkehrpunkt der jeweiligen Faser beim gewickelten Faserverlauf
- 32: Verdrillung der Faser in der Polkappenverstärkungsschicht
- 33: Kreis an Verdrillungen
- 33D: Durchmesser des Kreises an Verdrillungen
- 4: Ventil
- 100: Verfahren zur Herstellung des erfindungsgemäßen Druckbehälters
- 110: Bereitstellen eines Innenbehälters des Druckbehälters
- 120: Wickeln des Faserbands auf den Innenbehälters
- 130: Eintreten des Faserbands aus dem Mittelteil in den Bereich der Polkappen
- 140: Verdrillen zumindest eines Teils der Faserbänder im Bereich Polkappen
- 150: Wiederholen der voranstehenden Wickelschritte
- BB: Breite des Faserbands
- BF: Breite der jeweiligen Faser im Faserband
- F: Fasern des Faserverbundmaterials
- FB: Faserband aus einer Anzahl an Fasern
- FVM: Faserverbundmaterial
- FW: Faserwinkel zwischen der jeweiligen Faserrichtung und der Zylinderachse, beispielsweise der Eintrittsfaserwinkel beim Eintritt des Faserbands vom Mittelteil auf die Polkappe
- ZA: Symmetrieachse, beispielsweise Zylinderachse

## Patentansprüche

1. Ein faserverstärkter Druckbehälter (1) umfassend einem Innenbehälter (2) mit einem drehsymmetrischen Mittelteil (21), vorzugsweise ein zylindrisches Mittelteil (21), mit einer Symmetrieachse (ZA), vorzugsweise eine Zylinderachse, entlang des Mittelteils (21) und zwei das Mittelteil (21) abschließende kuppelförmige Polkappen (22), und eine auf den Innenbehälter (2) zu dessen Verstärkung gewickelte Außenschicht (3) aus Faserverbundmaterial (FVM) aus mehreren übereinander angeordneten Lagen an Fasern (F) eingebettet in einem Matrixmaterial, die als Faserband (FB) aus einer Anzahl an Fasern (F) mit einem orts- und lagenabhängigen Faserverlauf über den Innenbehälter (2) verlaufen, wobei das Faserband (FB) zumindest in einigen der Lagen aus dem Mittelteil (21) mit einem jeweiligen Eintrittsfaserwinkel (FW) relativ zu der Symmetrieachse (ZA) in den Bereich der kuppelförmigen Polkappen (22) eintritt und dort in einem jeweiligen Umkehrpunkt (31) in seiner Wickelrichtung (WR) zurück in Richtung des Mittelteils (22) geführt wird,
**dadurch gekennzeichnet, dass**
das Faserband (FB) im Bereich der Polkappen (22) mindestens eine Verdrillung (32) aufweist.

2. Der Druckbehälter (1) nach Anspruch 1,
**dadurch gekennzeichnet, dass**
die Außenschicht (3) mit steilen und flachen Helixlagen gewickelt ist.

3. Der Druckbehälter (1) nach Anspruch 1 oder 2,
**dadurch gekennzeichnet, dass**
alle Faserbänder (FB) im Bereich der Polkappen (22) mindestens eine Verdrillung (32) aufweisen.

4. Der Druckbehälter (1) nach einem der vorherigen Ansprüche,
**dadurch gekennzeichnet, dass**
die Verdrillung (32) eine Verdrillung um genau 180 Grad ist.

5. Der Druckbehälter (1) nach einem der vorherigen Ansprüche,
**dadurch gekennzeichnet, dass**
die Verdrillung (32) in dem Umkehrpunkt (31) des jeweiligen Faserbands (FB) angeordnet ist.

6. Der Druckbehälter (1) nach einem der voranstehenden Ansprüche,
**dadurch gekennzeichnet, dass**
das Faserband (FB) eine Breite (BB) zwischen 5% und 15%, vorzugsweise zwischen 9% und 11% des Durchmessers des Mittelteils besitzt.

7. Der Druckbehälter (1) nach einem der vorherigen Ansprüche,
**dadurch gekennzeichnet, dass**
die Verdrillungen (32) der Faserbänder (FB) einer Lage mit gleichem Eintrittsfaserwinkel (FW) auf einem Kreis (33) um einen geometrischen Mittelpunkt (22M) der Polkappe (22) herum angeordnet sind, wobei ein Durchmesser (33D) des Kreises (33) unter anderem vom jeweiligen Eintrittsfaserwinkel (FW) abhängt.

8. Der Druckbehälter (1) nach Anspruch 7,
**dadurch gekennzeichnet, dass**
die Verdrillungen (32) aller verdrillten Faserbänder (FB) auf jeweiligen konzentrisch zueinander liegenden Kreisen (33) um den Mittelpunkt (22M) der Polkappen (22) angeordnet sind.

9. Der Druckbehälter (1) nach Anspruch 8,
**dadurch gekennzeichnet, dass**
die Kreise mit den Verdrillungen (32) nicht direkt übereinander angeordnet sind.

10. Der Druckbehälter (1) nach einem der voranstehenden Ansprüche,
**dadurch gekennzeichnet, dass**
die Außenschicht (3) zumindest in einem zentralen Bereich (22z) der Polkappen (22) durch eine Materialanhäufung mittels Verdrillungen (32) eine Schichtdicke (3D) aufweist, die größer, vorzugsweise mehr als 50 % größer, als die einer Faserverbundschicht (FVM) ohne verdrillte Faserbänder (FB) ist.

11. Ein Verfahren (100) zur Herstellung eines faserverstärkten Druckbehälters (1) nach Anspruch 1 umfassend die Schritte:
- Bereitstellen (110) eines Innenbehälters (2) mit einem drehsymmetrischen, vorzugsweise zylindrischen, Mittelteil (21) mit einer Symmetrieachse (ZA), vorzugsweise einer Zylinderachse, und zwei das Mittelteil (21) abschließende kuppelförmige Polkappen (22);
- Wickeln (120) eines Faserbandes (FB) aus einer Anzahl an Fasern (F) in mehreren Lagen mit einem orts- und lagenabhängigen Faserverlauf über das Mittelteil (21) und die Polkappen des Innenbehälters (2) umfassend:
- Eintreten (130) des Faserbands (FB) zumindest in einigen der Lagen aus dem Mittelteil (21) mit einem jeweiligen Eintrittsfaserwinkel (FW) relativ zu der Zylinderachse (ZA) in den Bereich der Polkappen (22);
- Verdrillen (140) des Faserbands (FB) einer Lage zumindest bei einem Teil der Lagen im Bereich der Polkappen (22) zur Erzeugung einer Verdrillung (32);
- Rückführen (150) des Faserbands in einem jeweiligen Umkehrpunkt (31) in umgekehrter Wickelrichtung (WR) zurück in Richtung des Mittelteils (22); und
- Wiederholen der voranstehenden Wickelschritte (120, 130, 140, 150) bis zur Fertigstellung der Außenschicht (3) des Druckbehälters (1) aus Faserverbundmaterial (FVM) aus mehreren übereinander angeordneten Lagen an Fasern (F) eingebettet in einem Matrixmaterial.

12. Das Verfahren (100) nach Anspruch 11, wobei der Schritt des Verdrillens (140) für jedes der Faserbänder (FB) einer zu verdrillenden Lage im Bereich der Polkappen (22) um genau 180 Grad durchgeführt wird.

13. Das Verfahren (100) nach Anspruch 11 oder 12, wobei der Schritt des Verdrillens (140) im Umkehrpunkt (31) erfolgt.

14. Das Verfahren nach einem der Ansprüche 11 bis 13, wobei der Schritt des Verdrillens (140) so durchgeführt wird, dass die Verdrillungen (32) der Faserbänder (FB) mit gleichem Eintrittsfaserwinkel (FW) auf einem Kreis (33) um einen geometrischen Mittelpunkt (22M) der Polkappe (22) herum angeordnet sind, wobei ein Durchmesser (33D) des Kreises (33) unter anderem vom jeweiligen Eintrittsfaserwinkel (FW) abhängt, vorzugsweise sind die Verdrillungen (32) aller verdrillten Faserbänder (FB) der zu verdrillenden Lagen auf jeweiligen konzentrisch zueinander liegenden Kreisen (33) um den Mittelpunkt (22M) der Polkappen (22) angeordnet.

## Claims

1. A fiber-reinforced pressure vessel (1) comprising an inner vessel (2) with a rotationally symmetrical middle part (21), preferably a cylindrical middle part (21), with an axis of symmetry (ZA), preferably a cylinder axis, along the middle part (21) and two dome-shaped pole caps (22) which close off the middle part (21), and an outer layer (3), wound on the inner vessel (2) to reinforce it, made of fiber composite material (FVM) made of a plurality of plies of fibers (F) embedded in a matrix material which are arranged one above the other, which run as a fiber band (FB) made of a number of fibers (F) with a location-dependent and position-dependent fiber orientation across the inner vessel (2), wherein the fiber band (FB) at least in some of the plies enters from the middle part (21) at a respective entry fiber angle (FW) relative to the axis of symmetry (ZA) into the region of the dome-shaped pole caps (22) and is guided there at a respective point of reversal (31) in its winding direction (WR) back in the direction of the middle part (22), **characterized in that**
the fiber band (FB) has at least one twist (32) in the region of the pole caps (22).

2. The pressure vessel (1) according to Claim 1,
**characterized in that**
the outer layer (3) is wound with steep and flat helical plies.

3. The pressure vessel (1) according to Claim 1 or 2,
**characterized in that**
all the fiber bands (FB) have at least one twist (32) in the region of the pole caps (22).

4. The pressure vessel (1) according to one of the preceding claims, **characterized in that**
the twist (32) is a twist through precisely 180 degrees.

5. The pressure vessel (1) according to one of the preceding claims, **characterized in that**
the twist (32) is arranged at the point of reversal (31) of the respective fiber band (FB).

6. The pressure vessel (1) according to one of the preceding claims, **characterized in that**
the fiber band (FB) has a width (BB) of between 5% and 15%, preferably between 9% and 11%, of the diameter of the middle part.

7. The pressure vessel (1) according to one of the preceding claims, **characterized in that**
the twists (32) of the fiber bands (FB) of a ply with the same entry fiber angle (FW) are arranged on a circle (33) about a geometric midpoint (22M) of the pole cap (22), with a diameter (33D) of the circle (33) depending inter alia on the respective entry fiber angle (FW).

8. The pressure vessel (1) according to Claim 7,
**characterized in that**
the twists (32) of all the twisted fiber bands (FB) are arranged on respective circles (33) which lie concentrically about the midpoint (22M) of the pole caps (22).

9. The pressure vessel (1) according to Claim 8,
**characterized in that**
the circles with the twists (32) are not arranged directly one above the other.

10. The pressure vessel (1) according to one of the preceding claims, **characterized in that**
the outer layer (3) has a layer thickness (3D), at least in a central region (22z) of the pole caps (22), due to an accumulation of material by means of the arrangement of twists (32), which is greater, preferably more than 50% greater, than that of a fiber composite layer (FVM) without twisted fiber bands (FB).

11. A method (100) for producing a fiber-reinforced pressure vessel (1) according to Claim 1, comprising the steps of:
- providing (110) an inner vessel (2) with a rotationally symmetrical, preferably cylindrical, middle part (21) with an axis of symmetry (ZA), preferably a cylinder axis, and two dome-shaped pole caps (22) which close off the middle part (21);
- winding (120) a fiber band (FB) made of a number of fibers (F) in a plurality of plies with a location-dependent and ply-dependent fiber orientation over the middle part (21) and the pole caps of the inner vessel (2), comprising:
- entering (130) of the fiber band (FB), at least in some of the plies from the middle part (21), in the region of the pole caps (22) at a respective entry fiber angle (FW) relative to the cylinder axis (ZA);
- twisting (140) the fiber band (FB) of a ply at least for part of the plies in the region of the pole caps (22) to produce a twist (32);
- returning (150) the fiber band at a respective point of reversal (31) in the reverse winding direction (WR) back in the direction of the middle part (22); and
- repeating the preceding winding steps (120, 130, 140, 150) until the outer layer (3) of the pressure vessel (1) made of fiber composite material (FVM) made of a plurality of plies of fibers (F) embedded in a matrix material which are arranged one above the other is completed.

12. The method (100) according to Claim 11, wherein the step of twisting (140) for each of the fiber bands (FB) of a ply which is to be twisted in the region of the pole caps (22) is carried out through precisely 180 degrees.

13. The method (100) according to Claim 11 or 12, wherein the step of twisting (140) takes place at the point of reversal (31).

14. The method according to one of Claims 11 to 13, wherein the step of twisting (140) is carried out such that the twists (32) of the fiber bands (FB) at the same entry fiber angle (FW) are arranged on a circle (33) about a geometric midpoint (22M) of the pole cap (22), wherein a diameter (33D) of the circle (33) depends inter alia on the respective entry fiber angle (FW); preferably the twists (32) of all the twisted fiber bands (FB) of the plies to be twisted are arranged on respective circles (33), which lie mutually concentrically, about the midpoint (22M) of the pole caps (22).

## Revendications

1. Récipient sous pression renforcé de fibres (1) comprenant un récipient intérieur (2) doté d'une partie centrale symétrique en rotation (21), de préférence une partie centrale cylindrique (21), d'un axe de symétrie (ZA), de préférence un axe cylindrique, le long de la partie centrale (21) et de deux calottes polaires en forme de coupoles (22) terminant la partie centrale (21), et d'une couche extérieure (3) enroulée pour son renforcement sur le récipient intérieur (2) et composée de matériau composite fibreux (FVM) fait de plusieurs couches superposées de fibres (F) encastrées dans un matériau matriciel qui s'étendent sous forme de bande fibreuse (FB) composée d'un certain nombre de fibres (F) ayant une orientation de fibres dépendant de l'endroit et de la position au-dessus du récipient intérieur (2), la bande fibreuse (FB) pénétrant au moins dans certaines des couches depuis la partie centrale (21) avec un angle respectif de fibres d'entrée (FW) par rapport à l'axe de symétrie (ZA) au niveau des calottes polaires en forme de coupoles (22) et y étant guidée, à un point d'inversion respectif (31) dans son sens d'enroulement (WR), en retour en direction de la partie centrale (22),
**caractérisé en ce que**
la bande fibreuse (FB) présente au moins une torsion (32) au niveau des calottes polaires (22).

2. Récipient sous pression (1) selon la revendication 1,
**caractérisé en ce que**
la couche extérieure (3) est enroulée avec des couches hélicoïdales raides et plates.

3. Récipient sous pression (1) selon la revendication 1 ou 2,
**caractérisé en ce que**
toutes les bandes fibreuses (FB) présentent au moins une torsion (32) au niveau des calottes polaires (22).

4. Récipient sous pression (1) selon une des revendications précédentes, **caractérisé en ce que**
la torsion (32) est une torsion de 180 degrés précisément.

5. Récipient sous pression (1) selon une des revendications précédentes, **caractérisé en ce que**
la torsion (32) est disposée au point d'inversion (31) de la bande fibreuse respective (FB).

6. Récipient sous pression (1) selon une des revendications précédentes, **caractérisé en ce que**
la bande fibreuse (FB) possède une largeur (BB) représentant entre 5 % et 15 %, de préférence entre 9 % et 11 %, du diamètre de la partie centrale.

7. Récipient sous pression (1) selon une des revendications précédentes, **caractérisé en ce que**
les torsions (32) des bandes fibreuses (FB) d'une couche ayant le même angle de fibres d'entrée (FW) sont disposées sur un cercle (33) autour d'un point central géométrique (22M) de la calotte polaire (22), un diamètre (33D) du cercle (33) dépendant entre autres de l'angle respectif des fibres d'entrée (FW).

8. Récipient sous pression (1) selon la revendication 7,
**caractérisé en ce que**
les torsions (32) de toutes les bandes fibreuses tordues (FB) sont disposées sur des cercles respectifs (33) disposés concentriquement les uns par rapport aux autres autour du point central (22M) des calottes polaires (22).

9. Récipient sous pression (1) selon la revendication 8,
**caractérisé en ce que**
les cercles comportant les torsions (32) ne sont pas disposés directement les uns sur les autres.

10. Récipient sous pression (1) selon une des revendications précédentes, **caractérisé en ce que**
la couche extérieure (3) présente, au moins dans une partie centrale (22z) des calottes polaires (22), du fait d'un entassement de matière en raison des torsions (32), une épaisseur de couche (3D) qui est supérieure, de préférence supérieure de plus de 50 %, à celle d'une couche composite fibreuse (FVM) sans bandes fibreuses tordues (FB).

11. Procédé (100) de fabrication d'un récipient sous pression renforcé de fibres (1) selon la revendication 1, comprenant les étapes:
- de mise à disposition (110) d'un récipient intérieur (2) doté d'une partie centrale symétrique en rotation (21), de préférence cylindrique, ayant un axe de symétrie (ZA), de préférence un axe cylindrique, et de deux calottes polaires en forme de coupoles (22) terminant la partie centrale (21);
- d'enroulement (120) d'une bande fibreuse (FB) composée d'un certain nombre de fibres (F) en plusieurs couches avec une orientation de fibres dépendant de l'endroit et de la position au-dessus de la partie centrale (21) et des calottes polaires du récipient intérieur (2), comprenant les étapes:
- de pénétration (130) de la bande fibreuse (FB) au moins dans certaines des couches depuis la partie centrale (21) avec un angle de fibres d'entrée (FW) par rapport à l'axe cylindrique (ZA) au niveau des calottes polaires (22);
- de torsion (140) de la bande fibreuse (FB) d'une couche, au moins pour une partie des couches, au niveau des calottes polaires (22) pour générer une torsion (32);
- de renvoi (150) de la bande fibreuse, à un point d'inversion respectif (31) dans un sens d'enroulement inversé (WR), en retour en direction de la partie centrale (22); et
- de répétition des étapes d'enroulement précédentes (120, 130, 140, 150) jusqu'à la finition de la couche extérieure (3) du récipient sous pression (1) composé de matériau composite fibreux (FVM) fait de plusieurs couches superposées de fibres (F) encastrées dans un matériau matriciel.

12. Procédé (100) selon la revendication 11, dans lequel l'étape de torsion (140) est réalisée pour chacune des bandes fibreuses (FB) d'une couche à tordre au niveau des calottes polaires (22) à raison de 180 degrés précisément.

13. Procédé (100) selon la revendication 11 ou 12, dans lequel l'étape de torsion (140) se produit au point d'inversion (31).

14. Procédé selon une des revendications 11 à 13, dans lequel l'étape de torsion (140) est réalisée de manière à ce que les torsions (32) des bandes fibreuses (FB) ayant le même angle de fibres d'entrée (FW) soient disposées sur un cercle (33) autour d'un point central géométrique (22M) de la calotte polaire (22), un diamètre (33D) du cercle (33) dépendant entre autres de l'angle de fibres d'entrée respectif (FW), les torsions (32) de toutes les bandes fibreuses tordues (FB) des couches à tordre étant disposées de préférence sur des cercles (33) respectifs disposés concentriquement les uns par rapport aux autres autour du point central (22M) des calottes polaires (22).
